# EUROPEAN PATENT APPLICATION

(11) **EP 4 841 696 A1**
(43) Date of publication of application: **18.11.2026**
(21) Application number: 24932534.1
(22) Date of filing: 26.12.2024
(51) Int. Cl.: H01M 4/36, H01M 4/38, H01M 4/62, H01M 4/134, H01M 10/0525

(54) **SILICON-CARBON COMPOSITE MATERIAL, NEGATIVE ELECTRODE SHEET AND BATTERY**

(30) Priority: 26.03.2024 CN 202410352158
(71) Applicant: Zhuhai CosMX Battery Co., Ltd., Zhuhai, Guangdong 519180 (CN)
(72) Inventor: HUANG, Weibo, Zhuhai, Guangdong 519180 (CN); LIU, Chunyang, Zhuhai, Guangdong 519180 (CN)
(74) Representative: Metida
(86) International application number: PCT/CN2024/142650
(87) International publication number: WO 2025/200653

(57) **Abstract**

A silicon-carbon composite material, a negative electrode plate and a battery. The silicon-carbon composite material includes a hierarchically porous carbon material, silicon nanoparticles dispersed in pore channels of the hierarchically porous carbon material, and an amorphous carbon layer that coats a surface of the hierarchically porous carbon material, wherein the pore structure of the hierarchically porous carbon material includes micropores, mesopores and macropores, the pore volume is 0.4 cm³/g to 1.5 cm³/g, and the pore volume of the micropores accounts for 60% to 92% of the total pore volume. The silicon-carbon composite material can effectively inhibit the aggregation of the silicon nanoparticles and reduce the phenomenon of stress concentration; and when the silicon-carbon composite material is used as a negative electrode active material for the preparation of a battery, better first-cycle efficiency, a lower expansion rate and a higher cycling stability can be obtained.

## Description

### TECHNICAL FIELD

The present invention relates to the field of batteries, and specifically to a silicon-carbon composite material, a negative electrode plate, and a battery.

### BACKGROUND

Graphite negative electrode materials occupy a dominant position in the lithium-ion battery negative electrode market due to their advantages such as high electrical conductivity, strong stability, and low cost. However, with the continuous development of technology, the practical capacity of graphite materials has gradually approached their theoretical capacity (372 mAh/g), making them unable to meet the increasing demand for lithium-ion batteries with a higher energy density.

With a theoretical capacity of up to 4200 mAh/g, silicon is considered the most promising candidate to replace graphite as a next-generation negative electrode active material for lithium-ion batteries. Nevertheless, silicon undergoes drastic volume expansion (approximately 300%) during lithium intercalation and cycling, which results in the pulverization and failure of silicon particles.

The composite of silicon with a hierarchically porous carbon material enables the uniform distribution of silicon nanoparticles within the hierarchically porous carbon material, preventing particle fracture caused by stress concentration. However, the silicon nanoparticles loaded within the micropores of the hierarchically porous carbon material still exhibit significant volume expansion upon lithium intercalation, and after lithium deintercalation, the silicon nanoparticles tend to detach from the active carbon, leading to material failure. Therefore, it is of great importance to develop a negative electrode active material that enables the battery to have better initial efficiency performance, a lower expansion rate, and higher cycling stability.

### SUMMARY

An object of the present invention is to overcome the aforementioned problems existing in the prior art, and to provide a silicon-carbon composite material, a negative electrode plate, and a battery. The silicon-carbon composite material includes a hierarchically porous carbon material, silicon nanoparticles can be uniformly dispersed in the micropores of the hierarchically porous carbon material, and in combination with the amorphous carbon on the surface, the aggregation of the silicon nanoparticles is effectively suppressed, thereby reducing stress concentration. In addition, the amorphous carbon on the surface of the silicon-carbon composite material also can prevent the direct contact between the silicon particles and the electrolyte, thus reducing the occurrence of side reactions and improving the structural stability of the material. Furthermore, the silicon-carbon composite material is conducive to improving the performance of the battery, enabling a higher initial efficiency, a lower expansion rate, and higher cycling stability.

In order to achieve the above object, a first aspect of the present invention provides a silicon-carbon composite material including a hierarchically porous carbon material, silicon nanoparticles dispersed in the pore channels of the hierarchically porous carbon material, and an amorphous carbon layer coated on a surface of the hierarchically porous carbon material;
the pore structure of the hierarchically porous carbon material includes micropores, mesopores, and macropores;
a pore volume of the hierarchically porous carbon material is 0.4 cm³/g-1.5 cm³/g.

In the hierarchically porous carbon material, the pore volume of the micropores accounts for 60-92% of the total pore volume.

A second aspect of the present invention provides a negative electrode plate including a negative electrode current collector, and a negative electrode coating provided on a surface of at least one side of the negative electrode current collector, wherein the negative electrode coating includes a negative electrode active material, and the negative electrode active material includes the silicon-carbon composite material according to the first aspect.

A third aspect of the present invention provides a battery including the silicon-carbon composite material according to the first aspect and/or the negative electrode plate according to the second aspect.

In the present invention, the above technical solutions are used and have the following beneficial effects:
(1) In the silicon-carbon composite material provided by the present invention, the hierarchically porous carbon material includes a hierarchical pore structure including micropores, mesopores, and macropores, and silicon nanoparticles are dispersed in the micropores. Meanwhile, due to the confinement effect of the micropores, the agglomeration of the silicon nanoparticles is significantly alleviated, thereby effectively inhibiting the aggregation of the silicon nanoparticles and reducing stress concentration. In addition, the presence of mesopores and macropores within the hierarchically porous carbon material prevents the aggregation and blockage of silicon nanoparticles on the surface of the material and alleviates the expansion of silicon. Furthermore, the mesopores and macropores have relatively large pore volumes, which can provide more buffer space for the volume expansion of silicon particles during lithium intercalation. This prevents material failure caused by the detachment of silicon particles from the active carbon after lithium deintercalation, thereby further improving the structural stability of the silicon-carbon composite material.
(2) In the silicon-carbon composite material provided by the present invention, the hierarchically porous carbon material serves as a substrate that enables the uniform dispersion of silicon nanoparticles within the material, thus buffering the volume expansion of silicon particles caused by lithium intercalation during charging. Elemental silicon has a high theoretical capacity per gram, and depositing silicon nanoparticles in the hierarchically porous carbon material can significantly improve the electrochemical energy storage performance of the composite material. The amorphous carbon on the surface of the silicon-carbon composite material can prevent the direct contact between the silicon particles and the electrolyte, thereby reducing the occurrence of side reactions and improving the structural stability of the material. In addition, the amorphous carbon also provides an isolation effect to suppress the agglomeration tendency of silicon particles and prevent material failure caused by stress concentration, thereby improving the cycling stability of the negative electrode active material. In addition, since silicon is a semiconductor, the composite of a porous carbon material with silicon exhibits significantly reduced conductivity. Surface coating with amorphous carbon is beneficial for improving the conductivity of the material, thereby improving the initial efficiency performance of the negative electrode active material.
(3) The negative electrode plate and the battery prepared using the silicon-carbon composite material provided by the present invention as a negative electrode active material exhibit advantages such as a high capacity per gram, a high initial efficiency, low cycling expansion, and high cycling stability.

The endpoints of ranges and any values disclosed herein are not limited to such exact ranges or values, and these ranges or values should be understood to include values close to these ranges or values. For numerical value ranges, one or more new numerical value ranges can be obtained between endpoint values of various ranges, between endpoint values of various ranges and individual point values, and between individual point values, and these numerical value ranges should be regarded as specifically disclosed herein. In the present invention, unless otherwise specified, all the numerical ranges are inclusive of the endpoints.

### BRIEF DESCRIPTION OF THE DRAWINGS

FIG. 1 shows a schematic structural diagram of a hierarchically porous carbon material.
FIG. 2 shows a N₂ isothermal adsorption-desorption curve graph of the hierarchically porous carbon materials of Example 1 and Comparative example 1.
FIG. 3 shows a pore size distribution graph of the hierarchically porous carbon materials of Example 1 and Comparative example 1.
FIG. 4 shows Raman spectra of the hierarchically porous carbon materials of Example 1 and Comparative example 1.
FIG. 5 shows the high-resolution N 1s XPS spectra of the hierarchically porous carbon material of Example 1.
FIG. 6 shows the high-resolution P 2p XPS spectra of the hierarchically porous carbon material of Example 1.
FIG. 7 shows a capacity retention rate change curve graph of the lithium-ion pouch cells prepared using the negative electrode active materials of Example 1 and Comparative example 1.
FIG. 8 shows a thickness change rate curve graph of the lithium-ion pouch cells prepared using the negative electrode active materials of Example 1 and Comparative Example 1 over 1000 cycles.

### DETAILED DESCRIPTIONS OF THE EMBODIMENT

The technical solutions of the present invention will be further described in detail below with reference to specific embodiments. It should be understood that the following embodiments are provided exemplarily only to illustrate and explain the present invention and should not be construed as limiting the scope of protection of the present invention. All technologies implemented on the basis of the above content of the present invention are encompassed within the scope intended to be protected by the present invention.

It should be noted that the numerical representations of "first", "second", etc., in the present invention are merely used to distinguish different substances or modes of use rather than indicating an order.

A first aspect of the present invention provides a silicon-carbon composite material including a hierarchically porous carbon material, silicon nanoparticles dispersed in pore channels of the hierarchically porous carbon material, and an amorphous carbon layer coated on a surface of the hierarchically porous carbon material.

The pore structure of the hierarchically porous carbon material includes micropores, mesopores, and macropores.

The pore volume of the hierarchically porous carbon material is 0.4 cm³/g-1.5 cm³/g.

In the hierarchically porous carbon material, the pore volume of the micropores accounts for 60-92% of the total pore volume.

In the present invention, the terms "micropores" are defined as pores having a pore size of less than 2 nm, "mesopores" are defined as pores having a pore size in the range of 2-50 nm, and "macropores" are defined as pores having a pore size of greater than 50 nm (50 nm-200 nm).

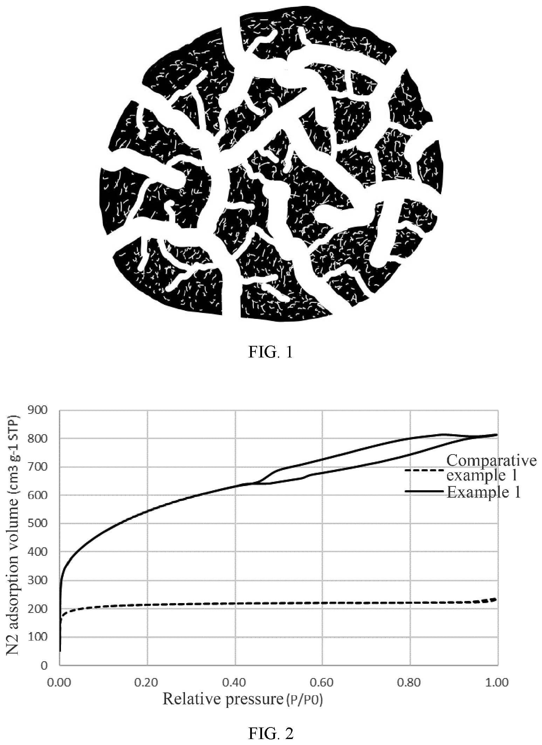

In the hierarchically porous carbon material of the present invention, mesopores and macropores are located between the micropores, forming an interconnected pore channel structure, as shown in FIG. 1.

In the present invention, the term "silicon nanoparticles" means that the size of the silicon particles is at the nanometre level; for example, the median particle size Dv50 may be 10-1000 nm. In some embodiments, the median particle size Dv50 of the silicon nanoparticles is 20-100 nm. Dv50 refers to the corresponding particle size when the cumulative particle size distribution percentage of the sample reaches 50%.

In some embodiments, the specific surface area of the hierarchically porous carbon material is 500 m²/g-2000 m²/g, for example, 500 m²/g, 600 m²/g, 700 m²/g, 800 m²/g, 900 m²/g, 1000 m²/g, 1100 m²/g, 1150 m²/g, 1200 m²/g, 1250 m²/g, 1300 m²/g, 1350 m²/g, 1400 m²/g, 1450 m²/g 1500 m²/g, 1600 m²/g, 1700 m²/g, 1800 m²/g, 1900 m²/g or 2000 m²/g. The greater the specific surface area, the higher the number of micropores. This enables the loading of more silicon particles and provides more sites for the reaction between the silicon particles and the electrolyte, thus improving the infiltration, which in turn contributes to a higher capacity per gram of the silicon-carbon material.

In some embodiments, the specific surface area of the hierarchically porous carbon material is 1000 m²/g-1500 m²/g.

In some embodiments, the specific surface area of the micropores of the hierarchically porous carbon material is 500 m²/g-1400 m²/g, for example, 900 m²/g, 1000 m²/g, 1100 m²/g, 1150 m²/g, 1200 m²/g, 1250 m²/g, 1300 m²/g, 1350 m²/g or 1400 m²/g.

In some embodiments, the specific surface area of the silicon-carbon composite material is 0.1 m²/g-50 m²/g, for example, 0.1 m²/g, 0.5m²/g, 1 m²/g, 5m²/g, 10 m²/g, 15 m²/g, 20 m²/g, 25 m²/g, 30 m²/g, 35 m²/g, 40 m²/g, 45 m²/g or 50 m²/g. By filling the vast majority of micropores within the hierarchically porous carbon material with silicon particles, the resulting silicon-carbon composite material has a significantly reduced specific surface area compared to the hierarchically porous carbon material. This lower specific surface area of the silicon-carbon composite material is beneficial to reducing the contact between the negative electrode active material and the electrolyte and minimizing the formation of the SEI film, thereby improving the initial efficiency and capacity retention rate of the battery.

In some embodiments, the specific surface area of the silicon-carbon composite material is 0.5 m²/g-6 m²/g.

In some embodiments, the pore volume of the silicon-carbon composite material is 0.0001 cm³/g-0.02 cm³/g, for example, 0.0001 cm³/g, 0.0005 cm³/g, 0.001 cm³/g, 0.002 cm³/g, 0.004 cm³/g, 0.006 cm³/g, 0.008 cm³/g, 0.01 cm³/g, 0.015 cm³/g or 0.02 cm³/g.

In some embodiments, the pore volume of the silicon-carbon composite material is 0.001 cm³/g-0.015 cm³/g.

The pore volume of the hierarchically porous carbon material in the present invention is 0.4 cm³/g-1.5 cm³/g, for example, 0.4 cm³/g, 0.5 cm³/g, 0.6 cm³/g, 0.7 cm³/g, 0.8 cm³/g, 0.9 cm³/g, 1 cm³/g, 1.1 cm³/g, 1.2 cm³/g, 1.3 cm³/g, 1.4 cm³/g or 1.5 cm³/g. The larger the pore volume of the hierarchically porous carbon material, the greater the amount of silicon that can be deposited, which is beneficial to improving the capacity per gram of the silicon-carbon material.

In some embodiments, the pore volume of the hierarchically porous carbon material is 0.7 cm³/g-1.2 cm³/g.

In some embodiments, the pore volume of the micropores in the hierarchically porous carbon material is 0.6 cm³/g-1.4 cm³/g, for example, 0.6 cm³/g, 0.7 cm³/g, 0.8 cm³/g, 0.9 cm³/g, 1 cm³/g, 1.1 cm³/g, 1.2 cm³/g, 1.3 cm³/g or 1.4 cm³/g. Micropores enable the uniform distribution of silicon particles within the pore structure of the carbon material, which alleviates stress concentration and mitigates material failure caused by expansion-induced pulverization of silicon particles.

In the present invention, the pore volume of the micropores in the hierarchically porous carbon material accounts for 60%-92% of the total pore volume, for example, 60%, 65%, 70%, 75%, 80%, 85%, 90% or 92%. In some embodiments, the pore volume of the micropores in the hierarchically porous carbon material is 80%-91% of the total pore volume.

In some embodiments, the pore volume of the mesopores in the hierarchically porous carbon material accounts for 5%-30% of the total pore volume, for example, 5%, 8%, 10%, 12%, 15%, 20%, 25%, or 30%. When the carbon material consists entirely of micropores, silicon particles tend to clog the surface of the material during silicon deposition, resulting in a reduced amount of silicon deposited within the interior of the material. The presence of a certain number of mesopores can alleviate this issue.

In some embodiments, the pore volume of the mesopores in the hierarchically porous carbon material is 6%-15% of the total pore volume.

In some embodiments, a pore volume of the macropores in the hierarchically porous carbon material accounts for 1%-20% of the total pore volume, for example, 1%, 2%, 4%, 6%, 8%, 10%, 12%, 14%, 14%, 16%, 18%, or 20%.

In some embodiments, the pore volume of the macropores in the hierarchically porous carbon material is 2%-10% of the total pore volume.

In the present invention, parameters such as the specific surface area, pore area, and pore volume of the material are determined by N₂ isothermal adsorption-desorption and calculated using the BET method.

In some embodiments, the median particle size Dv50 of the silicon-carbon composite material is 5 µm-15 µm, for example, 5 µm, 6 µm, 7 µm, 8 µm, 9 µm, 10 µm, 11 µm, 12 µm, 13 µm, 14 µm or 15 µm.

In some embodiments, the median particle size Dv50 of the silicon-carbon composite material is 5 µm-10 µm.

In some embodiments, the median particle size Dv50 of the hierarchically porous carbon material is 5 µm-15 µm, for example, 5 µm, 6 µm, 7 µm, 8 µm, 9 µm, 10 µm, 11 µm, 12 µm, 13 µm, 14 µm or 15 µm.

In some embodiments, the median particle size Dv50 of the hierarchically porous carbon material is 5 µm-10 µm.

Limiting the particle size of the material within a specific range is beneficial to improving the overall electrochemical performance of the negative electrode active material. Specifically, a smaller particle size of the material means that the material has a higher specific surface area and a larger contact area with the electrolyte. This results in excessive consumption of active lithium during the first charge cycle, leading to a lower initial efficiency of the negative electrode active material. When the particle size of the material is relatively large, the diffusion path for lithium ions within the material becomes longer, resulting in poor kinetic performance of the negative electrode active material. In addition, large-sized particles create significant interparticle voids, resulting in a lower packing density of the material. As a result, it is difficult to obtain a negative electrode plate having a higher compacted density, which leads to a relatively low volumetric energy density of the battery.

In the present invention, the particle size distribution of the material is measured by a laser particle size analyser. The specific measuring procedure is as follows: (1) the sample to be measured is added to a medium liquid and ultrasonically dispersed until homogeneous; (2) the medium liquid containing the sample to be measured is poured into the measurement chamber; and (3) the laser particle size analyser is started, and a laser beam illuminates the sample, causing light scattering; and the intensity and angle of the scattered light are recorded. The particle size and distribution of the sample to be measured can be analysed and obtained.

In some embodiments, the true density of the hierarchically porous carbon material is 1.9 g/cm³-2.6 g/cm³, for example, 1.9 g/cm³, 2 g/cm³, 2.1 g/cm³, 2.2 g/cm³, 2.3 g/cm³, 2.4 g/cm³, 2.5 g/cm³ or 2.6 g/cm³. When the true density of the hierarchically porous carbon material is within the aforementioned range, a silicon-carbon composite material with superior overall performance can be obtained. When the true density of the hierarchically porous carbon material falls below the aforementioned range, it indicates that an excessive abundance of pore structures are present in the material, which is not conducive to the structural stability of the material, particularly in the case of mesopores and macropores. This is because an excessive number of mesopores and macropores is likely to cause internal structure collapse of the material. When the true density of the hierarchically porous carbon material exceeds the aforementioned range, it indicates that the number of pore structures in the material is relatively small. During the subsequent chemical vapor deposition of silicon nanoparticles, due to insufficient active sites, it is difficult to deposit more silicon particles, resulting in a relatively low silicon content and a relatively low capacity per gram of the material.

In some embodiments, the true density of the hierarchically porous carbon material is 2 g/cm³-2.5 g/cm³.

In some embodiments, the true density of the silicon-carbon composite material is 1.5 g/cm³-2.5 g/cm³, for example, 1.5 g/cm³, 1.6 g/cm³, 1.7 g/cm³, 1.8 g/cm³, 1.9 g/cm³, 2 g/cm³, 2.1 g/cm³, 2.2 g/cm³, 2.3 g/cm³, or 2.5 g/cm³. When the true density of the negative electrode active material is within the aforementioned range, it can ensure that the silicon-carbon composite material has a relatively high silicon content while providing sufficient buffer space for the expansion of silicon particles during charging, thereby avoiding material failure caused by excessive volume expansion. When the true density of the negative electrode active material falls below the aforementioned range, it indicates that an excessive amount of pores remains within the material, and the silicon particles are not sufficiently deposited in the interior of the material, leading to a relatively low silicon content, and consequently, a relatively low capacity per gram of the material. When the true density of the negative electrode active material exceeds the aforementioned range, it indicates that the number of pore structures in the material is relatively small. During charging, silicon particles suffers from volume expansion upon lithium intercalation, and if the pore structures in the material are insufficient to accommodate the volume expansion of the silicon particles, the material structure will be damaged, leading to material failure.

In some embodiments, the true density of the silicon-carbon composite material is 1.7 g/cm³-2.1 g/cm³.

In the present invention, the true density of the material is determined by a gas displacement method. For example, a certain mass of the sample to be measured is first weighed using an analytical balance and then sealed in a sample chamber of known volume. A certain amount of an inert gas (such as helium or nitrogen) is introduced into the sample chamber and allowed to diffuse into an expansion chamber. The volume of the sample is derived from the pressure difference before and after the gas diffusion. Finally, the true density of the material is calculated based on the mass and volume of the material.

In some embodiments, the thickness of the amorphous carbon layer in the silicon-carbon composite material is 1 nm-20 nm, for example, 1 nm, 2 nm, 3 nm, 4 nm, 6 nm, 8 nm, 10 nm, 12 nm, 14 nm, 16 nm, 18 nm or 20 nm.

In some embodiments, the thickness of the amorphous carbon layer in the silicon-carbon composite material is 5 nm-10 nm. The amorphous carbon is uniformly coated on the surface of the silicon-carbon composite material, which can prevent the direct contact between silicon and the electrolyte, thereby reducing the occurrence of side reactions. Meanwhile, it can also alleviate the volume expansion of silicon during lithium intercalation, thereby improving the stability of the silicon-carbon material.

In some embodiments, an I_{D} / I_{G} ratio of the hierarchically porous carbon material is 0.5-1.5, for example, 0.5, 0.6, 0.7, 0.8, 0.9, 1, 1.1, 1.2, 1.3, 1.4, or 1.5.

In some embodiments, the I_{D} / I_{G} ratio of the hierarchically porous carbon material is 0.8-1.5.

In the Raman spectrum of the hierarchically porous carbon material, I_{D} / I_{G} ratio refers to the intensity ratio of the D peak to the G peak in the Raman spectrum. In the present invention, the Raman spectra are obtained using an RM2000 microscopic confocal Raman spectrometer (a product from Renishaw). The technical specifications are as follows: a He-Ne laser with a wavelength of 525 nm is used as the excitation source.

In general, the Raman spectra of the carbon material show characteristic peaks in regions of 1334-1346 cm⁻¹ and 1581-1585 cm⁻¹, which respectively correspond to the D (Defects and Disorder) band and G (Graphitic) band of the carbon material. The D band originates from the defects or disordered outward extension of sp³ domains in the carbon layer, while the G band is associated with the stretching vibration of sp² bonds in the carbon lattice. The peak intensity ratio I_{D}/I_{G} of the D band to the G band is commonly used to characterize the degree of structural ordering of amorphous carbon materials and graphitized carbon materials. A lower peak intensity ratio I_{D}/I_{G} indicates the presence of abundant defects in the structure of the porous carbon material, which facilitates the capture and adsorption of silane molecules on the carbon matrix surface during the subsequent chemical vapor deposition process, thereby increasing the silicon deposition amount.

In some embodiments, the silicon-carbon composite material further includes N element and/or P element.

In some embodiments, the hierarchically porous carbon material in the silicon-carbon composite material includes at least one of the N and P doping elements.

The high-resolution N 1s XPS spectra of the nitrogen element is deconvoluted using Gaussian peak fitting, yielding three characteristic peaks corresponding to pyridinic nitrogen (pyridinic N, at about 399 eV), pyrrolic nitrogen (pyrrolic N, at about 400.5 eV), and graphitic nitrogen (quaternary N, at about 405 eV), respectively. Pyridinic nitrogen and pyrrolic nitrogen are respectively located at carbon atom positions of six-membered rings and five-membered rings at the edges of graphite carbon layers. In contrast, graphitic nitrogen is located at carbon atom positions of six-membered rings within the interior of the graphite carbon layers. Different types of nitrogen atoms exert distinct enhancement effects on the electrochemical performance of active carbon materials. For example, pyridinic nitrogen and pyrrolic nitrogen can undergo reversible redox reactions during charging and discharging processes, providing additional pseudocapacitance. Graphitic nitrogen can increase the electron transfer rate and also can improve the conductivity of the electrode material.

After peak deconvolution and fitting of a P 2p characteristic peak curve of the phosphorus element, characteristic peaks appear at binding energies of approximately 132.7 and 133.9 eV, corresponding to P-C and P=O groups, respectively. The P atom in the P-C group can donate extra electrons to the carbon lattice, thereby improving the conductivity of the active carbon material. The P=O group can improve the surface infiltration of the electrode material, thereby increasing the contact area between the electrode material and an electrolyte.

In some embodiments, in the silicon-carbon composite material, a content of the N element is 6 wt% or less, for example, 0.001 wt%, 0.005 wt%, 0.01 wt%, 0.05 wt%, 0.1 wt%, 0.5 wt%, 1 wt%, 2 wt%, 3 wt%, 4 wt%, 5 wt%, or 6 wt%, and a content of the P element is 0.05 wt%-6 wt%, for example, 0.05 wt%, 0.1 wt%, 0.5 wt%, 1 wt%, 1.5 wt%, 2 wt%, 2.5 wt%, 3 wt%, 3.5 wt%, 4 wt%, 4.5 wt%, 5 wt%, 5.5 wt%, or 6 wt%. The N element and the P element provide extra electrons to the valence and conduction bands of the carbon atoms, which can accelerate the electron transfer rate and improve the conductivity of the electrode material. Meanwhile, the N element and the P element also can improve the surface infiltration of the electrode material, thereby increasing the contact area between the electrode material and the electrolyte.

In some embodiments, in the silicon-carbon composite material, the content of the N element is 2 wt%-5 wt%, and the content of the P element is 1 wt%-5 wt%.

In some embodiments, the content of the N element in the hierarchically porous carbon material is 10 wt% or less, for example, 0.001 wt%, 0.005 wt%, 0.01 wt%, 0.05 wt%, 0.1 wt%, 0.5 wt%, 1 wt%, 2 wt%, 3 wt%, 4 wt%, 5 wt%, 6 wt%, 7 wt%, 8 wt%, 9 wt%, or 10 wt%; and the content of the P element is 0.05 wt%-6 wt%, for example, 0.05 wt%, 0.1 wt%, 0.5 wt%, 1 wt%, 1.5 wt%, 2 wt%, 2.5 wt%, 3 wt%, 3.5 wt%, 4 wt%, 4.5 wt%, 5 wt%, 5.5 wt%, or 6 wt%.

In some embodiments, in the hierarchically porous carbon material, the content of the N element is 2 wt%-7 wt%, and the content of the P element is 1 wt%-5 wt%. The N element and the P element can accelerate the electron transfer rate and improve the conductivity of the electrode material, and also can improve the surface infiltration of the electrode material, thereby increasing the contact area between the electrode material and the electrolyte.

In some embodiments, a content of the hierarchically porous carbon material in the silicon-carbon composite material is 35 wt%-85 wt%, for example, 35 wt%, 40 wt%, 45 wt%, 50 wt%, 55 wt%, 60 wt%, 65 wt%, 70 wt%, 75 wt%, 80 wt%, or 85 wt%. In some embodiments, a content of the silicon nanoparticles in the silicon-carbon composite material is 10 wt%-60 wt%, for example, 10 wt%, 15 wt%, 20 wt%, 25 wt%, 30 wt%, 35 wt%, 40 wt%, 45 wt%, 50 wt%, 55 wt%, or 60 wt%. In some embodiments, a content of the amorphous carbon layer in the silicon-carbon composite material is 0.1 wt%-5 wt%, for example, 0.1 wt%, 0.5 wt%, 1 wt%, 1.5 wt%, 2 wt%, 2.5 wt%, 3 wt%, 3.5 wt%, 4 wt%, 4.5 wt%, or 5 wt%. When the contents of the components of the silicon-carbon composite material are within the aforementioned ranges, the obtained silicon-carbon composite material has superior overall performance, thereby enabling the battery to have better initial efficiency performance, a lower expansion rate, and higher cycling stability. The content of silicon nanoparticles is calculated as the content of the silicon element.

In the present invention, the contents of each element is determined by XPS.

In some embodiments, the conductivity of the silicon-carbon composite material is 10 S/cm-500 S/cm, for example, 10 S/cm, 20 S/cm, 30 S/cm, 40 S/cm, 50 S/cm, 60 S/cm, 70 S/cm, 80 S/cm, 90 S/cm, 100 S/cm, 150 S/cm, 200 S/cm, 250 S/cm, 300 S/cm, 350 S/cm, 400 S/cm, 450 S/cm, or 500 S/cm.

In some embodiments, the silicon-carbon composite material has a conductivity of 20 S/cm-320 S/cm. Materials with a low conductivity generate excessive heat during cell cycling, leading to capacity loss. Increasing the conductivity of the material can slow down the rate of cell aging and damage, thus extending the service life of the cell.

In the present invention, the conductivity of the silicon-carbon composite material can be measured according to the method of GB/T 24533-2019.

The present invention further provides a method for preparing a silicon-carbon composite material, the method including:
(1) mixing a N-containing biomass material with an organic phosphorus source solution, followed by drying to obtain a solid precursor;
(2) carbonizing the solid precursor prepared in step (1) to obtain an intermediate carbonized product;
(3) activating the intermediate carbonized product with an activating agent to obtain a hierarchically porous carbon material;
(4) depositing silicon particles into the hierarchically porous carbon material by means of chemical vapor deposition to obtain a nano-silicon@hierarchically porous carbon composite material; and
(5) depositing an amorphous carbon layer onto the surface of the nano-silicon@hierarchically porous carbon composite material by means of chemical vapor deposition, to obtain the silicon-carbon composite material.

The N-containing biomass material may be a conventional N-containing biomass in the art. In some embodiments, the N-containing biomass material includes, but is not limited to, at least one of yeast powder, soybean meal, okara, distiller's grains, vinegar residue, soy sauce residue, and spent mushroom substrate.

In some embodiments, the content of the N element in the N-containing biomass material is 1 wt%-20 wt%, for example, 1 wt%, 2 wt%, 4 wt%, 5 wt%, 6 wt%, 8 wt%, 10 wt%, 15 wt%, or 20 wt%.

It has been surprisingly found that when the N content of the biomass raw material is 7 wt% or less (including nearly 0), the electrical properties of the prepared button cells and pouch cells generally exhibit a gradual downward trend as the N content decreases.

In some embodiments, the content of the P element in the N-containing biomass material is 10 wt% or less, for example, 0 wt%, 0.5 wt%, 1 wt%, 2 wt%, 4 wt%, 6 wt%, 8 wt%, or 10 wt%.

In some embodiments, the organic phosphorus source includes at least one of phytic acid, ammonium phosphonoformate, phosphinopolycarboxylic acid, and sodium phosphonoacetate.

In some embodiments, the organic phosphorus source includes phytic acid.

The concentration of the organic phosphorus source solution may be a conventional choice in the art. In some embodiments, the concentration of the organic phosphorus source solution is in the range of 0.1 mol/L-5 mol/L, for example, 0.1 mol/L, 0.5 mol/L, 1 mol/L, 1.5 mol/L, 2 mol/L, 2.5 mol/L, 3 mol/L, 3.5 mol/L, 4 mol/L, 4.5 mol/L, or 5 mol/L.

By controlling the ratio of the organic phosphorus source to the N-containing biomass material within a certain range, an intermediate carbonized product with a certain amount of pore structures can be first formed, providing sufficient active sites for subsequent activation by an activating agent.

In some embodiments, a mass ratio of the organic phosphorus source to the N-containing biomass material is 0.1:1 - 4:1, for example, 0.1 : 1, 0.2 : 1, 0.5 : 1, 0.8 : 1, 1 : 1, 1.2 : 1, 1.5 : 1, 1.8 : 1, 2 : 1, 2.5 : 1, 3 : 1, 3.5 : 1, or 4 : 1.

In some embodiments, the mass ratio of the organic phosphorus source to the N-containing biomass material is 0.3:1 - 0.7:1.

In step (1), the mixing process may be accompanied by stirring, and the drying may be performed via a conventional drying method, such as freeze-drying.

In step (2), the carbonization treatment may be carried out in a conventional apparatus in the art, such as a tube furnace, in which the temperature is increased to the carbonization temperature at a specific heating rate (e.g., 3°C/min - 8°C/min). In some embodiments, in step (2), the carbonization treatment is carried out at a temperature of 400°C-600°C, for example, 400°C, 420°C, 440°C, 460°C, 480°C, 500°C, 520°C, 540°C, 560°C, 580°C, or 600°C, under an inert atmosphere for 2-4 h.

In step (3), the intermediate carbonized product is activated using an activating agent. In some embodiments, the activating agent includes, but is not limited to, KOH, ZnCl₂, H₃PO₄, etc.

In some embodiments, the mass ratio of the activating agent to the intermediate carbonized product is 0.1:1 - 4:1, for example, 0.1 : 1, 0.2 : 1, 0.5 : 1, 0.8 : 1, 1 : 1, 1.2 : 1, 1.5 : 1, 1.8 : 1, 2 : 1, 2.5 : 1, 3 : 1, 3.5 : 1, or 4 : 1.

In some embodiments, the mass ratio of the activating agent to the intermediate carbonized product is 0.5:1 - 2:1.

In some embodiments, in step (3), the activation treatment is carried out at a temperature of 600-1000°C, preferably 700-900°C, under an inert atmosphere for 1-3 h. The temperature can be increased to the activation temperature at a specific heating rate (e.g., 3°C/min - 8°C/min).

In step (4), silicon particles are deposited into the hierarchically porous carbon material by means of chemical vapor deposition. In some embodiments, the silicon source used in the chemical vapor deposition process of silicon particles includes silane and/or chlorosilane. The silane has a general formula of SiₙH₂ₙ₊₂, where n is a positive integer, for example, 1, 2, 3, 4, 5, or 6. Chlorosilane is a silane substituted with chlorine element, for example, dichlorosilane, trichlorosilane and tetrachlorosilane.

The silicon source can be mixed with an inert atmosphere and introduced into a CVD deposition chamber as a mixed gas. During the deposition process, the flow rate of the mixed gas can be adjusted according to actual situations, for example, within a range of 10-200 sccm.

In some embodiments, in step (4), the deposition is carried out at a temperature of 400-600°C under an inert atmosphere for 1-4 h. The temperature is increased to the deposition temperature at a specific heating rate (e.g., 3°C/min - 8°C/min).

In step (5), an amorphous carbon layer is deposited onto the surface of the nano-silicon@hierarchically porous carbon composite material by means of chemical vapor deposition. In some embodiments, the carbon source used in the chemical vapor deposition of the amorphous carbon layer includes at least one of C1-C4 alkanes (e.g., methane and ethane), C2-C4 alkenes (e.g., ethylene), and C2-C4 alkynes (e.g., acetylene). The carbon source can be introduced into the CVD deposition chamber in gaseous form. During the deposition process, the flow rate of the carbon source gas can be adjusted according to actual situations, for example, within a range of 10-200 sccm.

In some embodiments, in step (5), the deposition is carried out at a temperature of 600-800°C under an inert atmosphere for0.5-1.5 h. The temperature is increased to the deposition temperature at a specific heating rate (e.g., 3°C/min - 8°C/min).

In some embodiments, the inert atmosphere includes at least one of nitrogen, argon, and helium.

In some embodiments, the components are used in amounts such that in the silicon-carbon composite material, the content of the N element is 6 wt% or less, and the content of the P element is 0.05 wt%-6 wt%.

In some embodiments, the components are used in amounts such that in the silicon-carbon composite material, the content of the hierarchically porous carbon material is 35 wt%-85 wt%, the content of the silicon nanoparticles is 10 wt%-60 wt%, and the content of the amorphous carbon layer is 0.1 wt%-5 wt%.

In some embodiments, the components are used in amounts such that in the hierarchically porous carbon material, the content of the N element is 0.1 wt%-8 wt%, and the content of the P element is 0.05 wt%-6 wt%.

A second aspect of the present invention provides a negative electrode plate including a negative electrode current collector, and a negative electrode coating provided on a surface of at least one side of the negative electrode current collector, wherein the negative electrode coating includes a negative electrode active material, and the negative electrode active material includes the silicon-carbon composite material according to the first aspect.

In addition to the silicon-carbon composite material according to the first aspect of the present invention, the negative electrode active material may be further blended with other negative electrode active materials in the art, for example, a carbon material (such as graphite) and/or a silicon material. The silicon material is, for example, at least one of silicon nanoparticles, a silicon oxide (SiOx, where 0 < x < 2), and a silicon alloy (e.g., a silicon-aluminium alloy, a silicon-lithium alloy, a silicon-nickel alloy, a silicon-iron alloy, a silicon-titanium alloy, a silicon-manganese alloy, a silicon-copper alloy, and a silicon-tin alloy).

In some embodiments, the content of the silicon-carbon composite material in the negative electrode active material is 3 wt% or more, for example, 3 wt%, 4 wt%, 5 wt%, 10 wt%, 15 wt%, 20 wt%, 25 wt%, 30 wt%, 35 wt%, 40 wt%, 45 wt%, 50 wt%, 55 wt%, 60 wt%, 65 wt%, 70 wt%, 75 wt%, 80 wt%, 85 wt%, 90 wt%, 95 wt%, or 100 wt%.

In some embodiments, where the negative electrode active material includes other carbon and/or silicon materials, the content of the silicon-carbon composite material in the negative electrode active material is 3 wt%-10 wt%., for example, 3 wt%, 4 wt%, 5 wt%, 6 wt%, 7 wt%, 8 wt%, 9 wt% or 10 wt%.

In some embodiments, the content of the silicon-carbon composite material in the negative electrode coating is 3 wt%-99 wt%, for example, 3 wt%, 4 wt%, 5 wt%, 10 wt%, 15 wt%, 20 wt%, 25 wt%, 30 wt%, 35 wt%, 40 wt%, 45 wt%, 50 wt%, 55 wt%, 60 wt%, 65 wt%, 70 wt%, 75 wt%, 80 wt%, 85 wt%, 90 wt%, 95 wt%, or 99 wt%.

The negative electrode coating may further comprise an additive commonly used in a coating, such as a conductive agent and a binder.

In some embodiments, the negative electrode coating includes the negative electrode active material, the conductive agent, and the binder.

The conductive agent may comprise a conductive agent conventionally used in the art; for example, the conductive agent is selected from at least one of Super P, acetylene black, and Ketjen black.

The binder may comprise a binder conventionally used in the art; for example, the binder is selected from at least one of sodium carboxymethyl cellulose, carboxymethyl cellulose, polyvinylidene fluoride, and styrene-butadiene rubber.

In some embodiments, based on the total weight of the negative electrode coating, the content of the negative electrode active material may be 80-99 wt% (e.g., 80 wt%, 81 wt%, 82 wt%, 83 wt%, 84 wt%, 85 wt%, 86 wt%, 87 wt%, 88 wt%, 89 wt%, 90 wt%, 91 wt%, 92 wt%, 93 wt%, 94 wt%, 95 wt%, 96 wt%, 97 wt%, 98 wt%, or 99 wt%), the content of the conductive agent may be 0.5-10 wt% (e.g., 10 wt%, 9 wt%, 8 wt%, 7 wt%, 6 wt%, 5 wt%, 4 wt%, 3 wt%, 2 wt%, 1 wt%, or 0.5 wt%), and the content of the binder may be 0.5-10 wt% (e.g., 10 wt%, 9 wt%, 8 wt%, 7 wt%, 6 wt%, 5 wt%, 4 wt%, 3 wt%, 2 wt%, 1 wt%, or 0.5 wt%).

In some embodiments, based on the total weight of the negative electrode coating, the content of the negative electrode active material is 95-99 wt%, the content of the conductive agent is 0.5-2.5 wt%, and the content of the binder is 0.5-2.5 wt%.

A third aspect of the present invention provides a battery including the silicon-carbon composite material according to the first aspect and/or the negative electrode plate according to the second aspect.

The components of the battery other than the negative electrode plate (e.g., a positive electrode plate, a separator, an electrolyte, and an aluminium-plastic film) may all be conventional choices in the art.

In some embodiments, the positive electrode plate includes a positive electrode current collector, and a positive electrode active material layer coated on a surface of at least one side of the positive electrode current collector, wherein the positive electrode active material layer includes a positive electrode active material.

The positive electrode active material may be a conventional choice in the art. For example, the positive electrode active material is selected from at least one of a lithium cobalt oxide (LCO), a nickel-cobalt-manganese ternary material (NCM), a nickel-cobalt-aluminium ternary material (NCA), a nickel-cobalt-manganese-aluminium quaternary material (NCMA), lithium iron phosphate (LFP), lithium manganese phosphate (LMP), lithium vanadium phosphate (LVP), a lithium manganese oxide (LMO), a lithium nickel oxide, binary lithium nickel manganese oxide materials, lithium-rich manganese-based materials, and lithium manganese iron phosphate. The positive electrode active material may further be present in a form including a doping element and/or a coating layer.

The battery can be assembled in accordance with conventional methods in the art.

The battery can be a liquid electrolyte battery, a semi-solid-state battery, or an all-solid-state battery.

The battery may be a lithium-ion battery, such as a lithium-ion secondary battery.

It should be noted that the numerical representations of "first", "second", etc., in the present invention are merely used to distinguish different substances or modes of use rather than indicating an order.

The technical solutions in the embodiments of the present invention are clearly and completely described below with reference to the embodiments of the present invention. Apparently, the described embodiments are merely some rather than all of the embodiments of the present invention. Based on the examples of the present invention, all other examples obtained by those of ordinary skill in the art without creative efforts fall within the scope of protection of the present invention.

The materials, reagents, etc. used in the following examples are all commercially available, unless otherwise specified.

The present invention will be described below in detail with reference to specific examples, which are intended to understand but not to limit the present invention.

In the following examples, unless otherwise specified, the materials and reagents used are commercially available.

In the following examples, the specific surface area and pore structure information of the materials are determined by N₂ isothermal adsorption-desorption and fitted and calculated using models such as BET and NLDFT.

In the following examples, the particle size distribution of the materials is measured by a laser particle size analyser. The specific measuring procedure includes: (1) the sample to be measured is added to a medium liquid and ultrasonically dispersed until homogeneous; (2) the medium liquid containing the sample to be measured is poured into the measurement chamber; and (3) the laser particle size analyser is started, and a laser beam illuminates the sample, causing light scattering; and the intensity and angle of the scattered light are recorded. The particle size and distribution of the sample to be measured can be analysed and obtained.

### Example 1

This example was used to illustrate the preparation of the silicon-carbon composite material of the present invention.

### (1) Preparation of hierarchically porous carbon material

Yeast powder (with a N element content of about 7 wt%) was mixed with a phytic acid solution to form a homogeneous precursor solution (with the mass ratio of phytic acid to the yeast powder being 0.5 : 1). The mixture was refrigerated at - 20°C for 8 h. The solidified precursor was rapidly transferred to a freeze-dryer and dried at -80°C under a vacuum of 10 Pa for 12-20 h to obtain a fluffy solid precursor.

The solid precursor was placed in a tube furnace, heated to 500°C at a heating rate of 5°C/min under a N₂ atmosphere, held at that temperature for 3 h, and then naturally cooled to room temperature to obtain an intermediate carbonized product. KOH and the intermediate carbonized product were uniformly mixed (with the mass ratio of KOH to the intermediate carbonized product being 1 : 1). The reactants were then placed in a tube furnace, heated to 800°C at a heating rate of 5°C/min under a N₂ atmosphere, and held at that temperature for activation for 2 h, followed by natural cooling to room temperature to obtain the hierarchically porous carbon material.

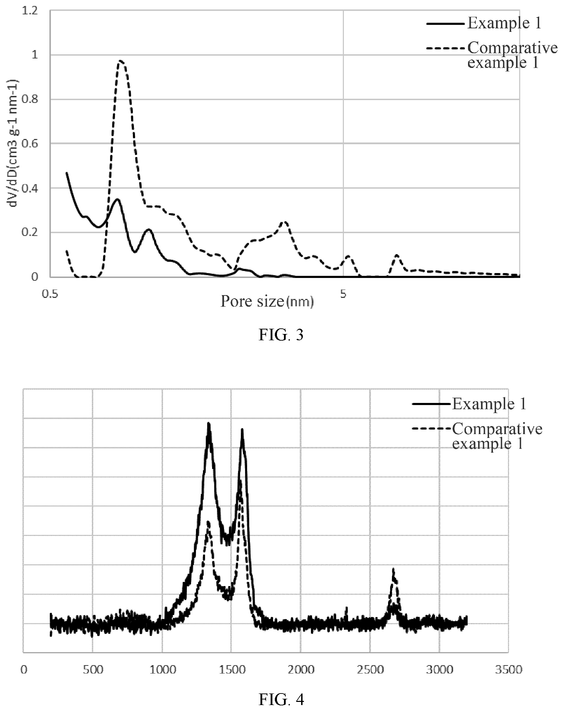

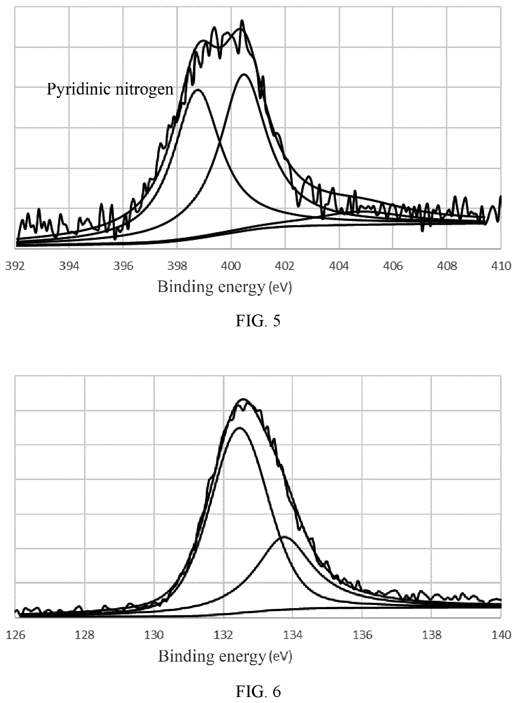

FIGs. 2 and 3 respectively show a N₂ isothermal adsorption-desorption curve graph and a pore size distribution graph of the obtained hierarchically porous carbon material. FIG. 4 shows the Raman spectra of the hierarchically porous carbon material. FIG. 5 shows the high-resolution N 1s XPS spectra of the hierarchically porous carbon material, and FIG. 6 shows the high-resolution P 2p XPS spectra of the hierarchically porous carbon material.

### (2) Preparation of nano-silicon@hierarchically porous carbon composite material

The hierarchically porous carbon material was placed in a tube furnace and heated from room temperature to 500°C at 5°C/min under a N₂ atmosphere, and a SiH₄-N₂ mixed gas containing 20% SiH₄ was introduced at a flow rate of 60 sccm. The temperature was maintained at 500°C for 3 h to obtain the nano-silicon@hierarchically porous carbon composite material.

### (3) Preparation of silicon-carbon composite material

The nano-silicon@hierarchically porous carbon composite material was placed in a tube furnace, and heated from room temperature to 700°C at 5°C/min under a N₂ atmosphere, and an acetylene gas was introduced at a flow rate of 100 sccm. The temperature was maintained for 1 h to obtain an amorphous carbon@nano-silicon@hierarchically porous carbon composite material having a surface coated with an amorphous carbon layer, which was the silicon-carbon composite material of the present invention.

The physicochemical characteristics (specific surface area, pore characteristics, median particle size, true density, I_{D}/I_{G}, N element content, and P element content) of the hierarchically porous carbon material were determined. The results are shown in Table 1.

The thickness of the amorphous carbon layer and the physicochemical characteristics (specific surface area, pore volume, true density, silicon content, N element content, and P element content) of the silicon-carbon composite material were determined. The results are shown in Table 2.

### Example 2

Example 2a: This example was carried out with reference to Example 1, except that the mass ratio of phytic acid to the yeast powder in step (1) was adjusted to 0.25 : 1.

Example 2b: This example was carried out with reference to Example 1, except that the mass ratio of phytic acid to the carbon-containing precursor during the pre-activation process was adjusted to 1 : 1.

Example 2c: This example was carried out with reference to Example 1, except that the mass ratio of phytic acid to the carbon-containing precursor during the pre-activation process was adjusted to 2 : 1.

The characterization results of the prepared hierarchically porous carbon material, amorphous carbon layer and silicon-carbon composite material are shown in Tables 1 and 2, respectively.

### Example 3

Example 3a: This example was carried out with reference to Example 1, except that the mass ratio of KOH to the intermediate carbonized product in step (1) was adjusted to 0.5 : 1.

Example 3b: This example was carried out with reference to Example 1, except that the mass ratio of KOH to the intermediate carbonized product in step (1) was adjusted to 2 : 1.

Example 3c: This example was carried out with reference to Example 1, except that the mass ratio of KOH to the intermediate carbonized product in step (1) was adjusted to 3 : 1.

The characterization results of the prepared hierarchically porous carbon material, amorphous carbon layer and silicon-carbon composite material are shown in Tables 1 and 2, respectively.

### Example 4

Example 4a: This example was carried out with reference to example 1, except that the activation temperature was set to 700°C.

Example 4b: This example was carried out with reference to example 1, except that the activation temperature was set to 900°C.

The characterization results of the prepared hierarchically porous carbon material, amorphous carbon layer and silicon-carbon composite material are shown in Tables 1 and 2, respectively.

### Example 5

Example 5a: This example was carried out with reference to Example 1, except that the yeast powder was replaced with an equal weight of soybean meal (with a N element content of about 5 wt%).

Example 5b: This example was carried out with reference to Example 1, except that the yeast powder was replaced with an equal weight of distiller's grains (with a N element content of about 3 wt%).

Example 5c: This example was carried out with reference to Example 1, except that the yeast powder was replaced with an equal weight of corn starch (with a N element content of about 0 wt%).

The characterization results of the prepared hierarchically porous carbon material, amorphous carbon layer and silicon-carbon composite material are shown in Tables 1 and 2, respectively.

### Example 6

Example 6a: This example was carried out with reference to Example 1, except that in step (2), the holding time under a SiH₄-N₂ mixed atmosphere was changed to 1 h.

Example 6b: This example was carried out with reference to Example 1, except that in step (2), the flow rate of the SiH₄-N₂ mixed gas was changed to 120 sccm.

The characterization results of the prepared amorphous carbon layers and silicon-carbon composite materials are shown in Table 2.

### Example 7

Example 7a: This example was carried out with reference to Example 1, except that the holding time for depositing amorphous carbon in step (3) was changed to 0.5 h, and the thickness of the resulting amorphous carbon layer was 1.22 nm.

Example 7b: This example was carried out with reference to Example 1, except that the flow rate for depositing amorphous carbon in step (3) was changed to 150 sccm, and the thickness of the resulting amorphous carbon layer was 5.53 nm.

Example 7c: This example was carried out with reference to Example 1, except that the holding time for depositing amorphous carbon in step (3) was changed to 3 h, and the thickness of the resulting amorphous carbon layer was 15.2 nm.

The characterization results of the prepared amorphous carbon layers and silicon-carbon composite materials are shown in Table 2.

### Comparative example 1

This comparative example was carried out with reference to Example 1, except that phytic acid and KOH were not added in step (1).

FIGs. 2 and 3 respectively show a N₂ isothermal adsorption-desorption curve graph and a pore size distribution graph of the hierarchically porous carbon material of Comparative example 1.

The characterization results of the prepared hierarchically porous carbon material, amorphous carbon layer and silicon-carbon composite material are shown in Tables 1 and 2, respectively.

### Comparative example 2

This comparative example was carried out with reference to Example 1, except that phytic acid was not added in step (1).

The characterization results of the prepared hierarchically porous carbon material, amorphous carbon layer and silicon-carbon composite material are shown in Tables 1 and 2, respectively.

### Comparative example 3

This comparative example was carried out with reference to Example 1, except that KOH was not added in step (1).

The characterization results of the prepared hierarchically porous carbon material, amorphous carbon layer and silicon-carbon composite material are shown in Tables 1 and 2, respectively.

### Comparative example 4

This comparative example was carried out with reference to Example 1, except that no amorphous carbon was coated on the nano-silicon@hierarchically porous carbon composite material; that is, a nano-silicon@hierarchically porous carbon composite material prepared according to Example 1 was the silicon-carbon composite material.

The characterization results of the prepared hierarchically porous carbon material, amorphous carbon layer and silicon-carbon composite material are shown in Tables 1 and 2, respectively.

**Table 1**

| No. | Specific surface area (m²/g) | volume Pore (cm³/g) | Micropore fraction (%) | Mesopore fraction (%) | Macropore fraction (%) | Median particle size Dᵥ₅₀ (µm) | True density (g/cm³) | I_{D}/I_{G} | N element content (%) | P element content (%) |
|---|---|---|---|---|---|---|---|---|---|---|
| Example 1 | 1453 | 0.872 | 87.3 | 8.2 | 4.5 | 6.77 | 2.27 | 1.011 | 5.25 | 3.22 |
| Example 2a | 1235 | 0.745 | 90.1 | 6.2 | 3.7 | 6.73 | 2.33 | 1.004 | 5.07 | 2.13 |
| Example 2b | 1113 | 0.688 | 69.8 | 19.8 | 10.4 | 6.72 | 2.16 | 1.058 | 5.21 | 4.04 |
| Example 2c | 708 | 0.608 | 62.1 | 28.7 | 9.2 | 6.52 | 2.10 | 1.083 | 4.82 | 6.43 |
| Example 3a | 737 | 0.623 | 79.2 | 12.3 | 8.5 | 6.80 | 2.37 | 1.008 | 5.31 | 3.15 |
| Example 3b | 1578 | 1.217 | 79.4 | 10.4 | 10.2 | 6.71 | 2.36 | 1.127 | 5.08 | 3.12 |
| Example 3c | 1724 | 1.532 | 71.9 | 6.4 | 21.7 | 6.43 | 2.01 | 1.287 | 5.45 | 3.78 |
| Example 4a | 1260 | 0.783 | 85.1 | 9.0 | 5.9 | 6.77 | 2.30 | 1.127 | 5.67 | 3.72 |
| Example 4b | 1178 | 0.715 | 82.3 | 9.5 | 8.2 | 6.79 | 2.34 | 0.921 | 2.87 | 1.79 |
| Example 5a | 1386 | 0.792 | 86.1 | 9.1 | 4.8 | 14.27 | 2.24 | 1.015 | 3.72 | 3.41 |
| Example 5b | 1407 | 0.824 | 88.2 | 8.5 | 3.3 | 16.78 | 2.3 | 1.009 | 3.24 | 3.25 |
| Example 5c | 1377 | 0.742 | 85.2 | 9.5 | 5.3 | 7.52 | 2.31 | 1.013 | 0.03 | 4.21 |
| Comparative example 1 | 421 | 0.204 | 92.3 | 5.3 | 2.2 | 6.95 | 2.40 | 0.956 | 5.22 | 0.16 |
| Comparative example 2 | 1244 | 0.672 | 96.7 | 2.5 | 0.8 | 6.85 | 2.30 | 0.987 | 5.25 | 0.30 |
| Comparative example 3 | 677 | 0.395 | 72.3 | 18.5 | 9.2 | 6.83 | 2.39 | 0.976 | 5.18 | 3.32 |

**Table 2**

| No. | Amorphous carbon thickness (nm) | Specific surface area (m²/g) | Pore volume (cm³/g) | True density (g/cm³) | Silicon content (%) | N element content (%) | P element content (%) |
|---|---|---|---|---|---|---|---|
| Example 1 | 7.04 | 1.05 | 0.0031 | 1.84 | 51.2 | 3.49 | 2.15 |
| Example 2a | 8.11 | 27.81 | 0.0252 | 1.65 | 42.7 | 3.37 | 1.42 |
| Example 2b | 6.87 | 12.43 | 0.0124 | 1.70 | 44.7 | 3.46 | 2.69 |
| Example 2c | 7.56 | 3.08 | 0.0079 | 1.74 | 45.1 | 3.89 | 4.71 |
| Example 3a | 7.45 | 2.59 | 0.0066 | 1.75 | 46.1 | 3.53 | 2.10 |
| Example 3b | 7.78 | 28.16 | 0.0276 | 1.65 | 43.6 | 3.37 | 2.08 |
| Example 3c | 8.91 | 51.21 | 0.0378 | 1.59 | 42.8 | 3.91 | 2.51 |
| Example 4a | 7.11 | 1.62 | 0.0081 | 1.82 | 47.4 | 3.76 | 2.48 |
| Example 4b | 7.46 | 2.28 | 0.0062 | 1.75 | 45.2 | 1.57 | 0.98 |
| Example 5a | 7.06 | 1.54 | 0.0035 | 1.77 | 50.6 | 3.05 | 2.28 |
| Example 5b | 8.13 | 1.28 | 0.0032 | 1.82 | 49.7 | 2.33 | 2.18 |
| Example 5c | 6.77 | 2.09 | 0.0042 | 2.27 | 47.2 | 0.01 | 2.27 |
| Example 6a | 7.06 | 10.72 | 0.0102 | 1.68 | 44.8 | 3.62 | 2.17 |
| Example 6b | 7.10 | 54.89 | 0.0471 | 1.54 | 42.4 | 3.54 | 2.32 |
| Example 7a | 1.22 | 15.62 | 0.0167 | 1.68 | 50.8 | 3.57 | 2.41 |
| Example 7b | 5.53 | 6.12 | 0.0088 | 1.70 | 50.7 | 3.27 | 2.13 |
| Example 7c | 15.2 | 0.23 | 0.0017 | 2.17 | 46.2 | 2.54 | 1.78 |
| Comparative example 1 | 7.35 | 0.17 | 0.0012 | 2.35 | 21.8 | 3.47 | 0.11 |
| Comparative example 2 | 7.12 | 3.14 | 0.0078 | 1.73 | 38.2 | 3.49 | 0.13 |
| Comparative example 3 | 7.45 | 4.25 | 0.0098 | 1.70 | 32.4 | 3.44 | 2.21 |
| Comparative example 4 | / | 3.46 | 0.0077 | 1.78 | 50.4 | 3.60 | 2.37 |

### Test examples

### 1. Preparation and performance evaluation of button cell

### (1) Preparation of negative electrode plate

The silicon-carbon composite materials prepared in the examples and comparative examples were mixed with conductive carbon black, carbon nanotubes, and polyacrylic acid at a mass ratio of 80 : 9 : 1 : 10, and deionized water was added. The mixture was uniformly mixed under the action of a vacuum mixer to obtain a negative electrode slurry, which was uniformly coated onto a copper foil, with the areal density controlled within the range of 4-8 mg/cm². Next, the copper foil was placed in an oven and dried at 80°C for 8-12 h, followed by rolling and slitting to obtain the negative electrode plate.

### (2) Assembly of button cell

The negative electrode plate was punched into a negative electrode disc having a diameter of 16 mm using a punching machine, and a lithium metal sheet was punched into a positive electrode disc having a diameter of 18 mm. In a glove box, a spring, a spacer, the negative electrode disc, a cellulose separator, and the positive electrode disc were sequentially placed into a button cell case. An appropriate amount of an electrolyte was added, and the case was sealed by compaction using a crimping machine to obtain the button cell.

### (3) Performance test

At normal temperature (25°C), the performance of the prepared button half-cell was tested using a LAND test system. The specific test procedure included: (a) discharging at 0.025 C to 5 mV, and leaving to stand for 10 min; (b) discharging at 0.01 C to 5 mV, and leaving to stand for 10 min; and (c) charging at 0.02 C to 1.5 V, and leaving to stand for 10 min. Steps (a)-(c) were repeated for 3 cycles.

The initial efficiency of the cell was derived from the discharge and charge curves, and the capacity per gram of the negative electrode active material was calculated based on the mass thereof. The results are shown in Table 3.

**Table 3**

| No. | Initial efficiency (%) | Capacity per gram (mAh/g) |
|---|---|---|
| Example 1 | 90.5 | 1790 |
| Example 2a | 86.2 | 1509 |
| Example 2b | 87.5 | 1575 |
| Example 2c | 88.1 | 1588 |
| Example 3a | 88.3 | 1621 |
| Example 3b | 85.8 | 1539 |
| Example 3c | 82.5 | 1512 |
| Example 4a | 88.9 | 1664 |
| Example 4b | 88.3 | 1592 |
| Example 5a | 90.1 | 1770 |
| Example 5b | 90.4 | 1740 |
| Example 5c | 88.8 | 1658 |
| Example 6a | 87.7 | 1578 |
| Example 6b | 82.2 | 1499 |
| Example 7a | 87.0 | 1776 |
| Example 7b | 87.5 | 1773 |
| Example 7c | 88.2 | 1625 |
| Comparative example 1 | 75.1 | 819 |
| Comparative example 2 | 80.5 | 1361 |
| Comparative example 3 | 79.2 | 1169 |
| Comparative example 4 | 81.7 | 1763 |

### 2. Preparation and performance evaluation of pouch cell

### (1) Preparation of negative electrode plate

The silicon-carbon composite materials prepared in the examples and comparative examples, graphite, carbon black, polyacrylic acid, sodium carboxymethyl cellulose, and styrene-butadiene rubber were mixed in a mass ratio of 4.86 : 92.34 : 0.05 : 1.4 : 0.35 : 1, and deionized water was added. The mixture was uniformly mixed under the action of a vacuum mixer to obtain a negative electrode slurry, which was uniformly coated onto a copper foil, with the areal density controlled within the range of 4-8 mg/cm². Next, the copper foil was placed in an oven and dried at 80°C for 8-12 h, followed by rolling and slitting to obtain the negative electrode plate.

### (2) Preparation of positive electrode plate

A lithium cobalt oxide, PVDF, acetylene black, and carbon nanotubes were mixed in a mass ratio of 96 : 2 : 1.5 : 0.5, and N-methylpyrrolidone was added. The mixture was uniformly mixed under the action of a vacuum mixer to obtain a positive electrode slurry, which was uniformly coated onto an aluminium foil, with the areal density controlled within the range of 8-15 mg/cm². Next, the aluminium foil was placed in an oven and dried at 120°C for 8-12 h, followed by rolling and slitting to obtain the positive electrode plate.

### (3) Assembly of pouch cell

The negative electrode plate, a separator, the positive electrode plate were stacked sequentially, followed by the procedures of winding, packaging, electrolyte injection, secondary packaging, formation, sorting, etc., to obtain the cell.

Examples R1-R3: Pouch cells were prepared according to the method described above using the silicon-carbon composite material obtained in Example 1, except that with the total amount of the silicon-carbon composite material and graphite remaining unchanged, the content of the silicon-carbon composite material based on the total mass of the silicon-carbon composite material and graphite was adjusted from 5 wt% to 4 wt%, 7 wt% and 10 wt%, respectively.

### (4) Performance test of full cell

At normal temperature (25°C), the performance of the prepared pouch cell was tested using a LAND test system. The specific test procedure included: (1) charging at a constant current of 2 C to 4.53 V, with a cutoff current of 0.05 C, and then leaving to stand for 10 min; (2) discharging at a constant current of 0.7 C to 3.0 V, and then leaving to stand for 10 min. Steps (1)-(2) were repeated for 1000 cycles.

The capacity retention rate per cycle of the cell was calculated based on the initial discharge capacity and the discharge capacity of each cycle. Before testing, the initial cell thickness was measured and recorded using a PPG battery thickness gauge. After every 100 cycles, the current cell thickness was measured and recorded using the PPG battery thickness gauge, and the thickness change rate of the cell was calculated.

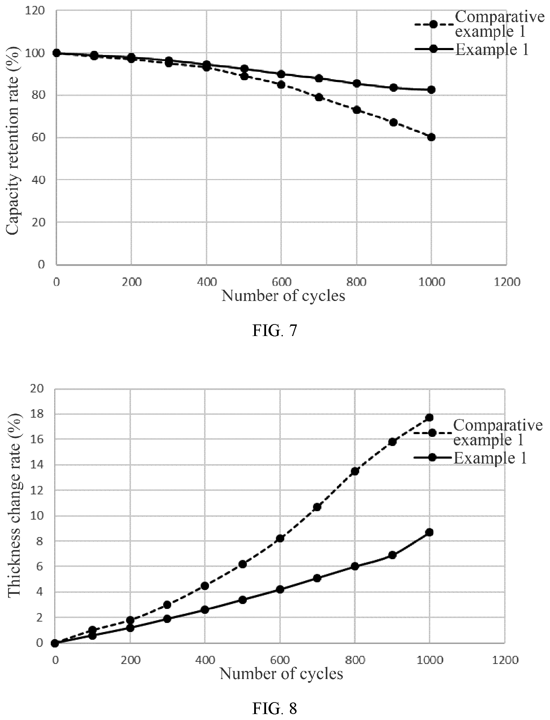

The capacity per gram, initial efficiency, capacity retention rate after 1000 cycles, and thickness change rate after 1000 cycles of the prepared full cell were determined. The results are shown in Table 4. FIG. 7 shows a capacity retention rate change curve graph of the lithium-ion pouch cells prepared using the negative electrode active materials of Example 1 and Comparative example 1. FIG. 8 shows a thickness change rate curve graph of the lithium-ion pouch cells prepared using the negative electrode active materials of Example 1 and Comparative Example 1 over 1000 cycles.

**Table 4**

| No. | Capacity per gram (mAh/g) | Initial efficiency (%) | Capacity retention rate after 1000 cycles (%) | Thickness change rate after 1000 cycles (%) |
|---|---|---|---|---|
| Example 1 | 427 | 89.1 | 82.5 | 8.7 |
| Example 2a | 413 | 85.0 | 71.8 | 12.0 |
| Example 2b | 416 | 86.3 | 77.3 | 11.2 |
| Example 2c | 417 | 86.8 | 78.0 | 10.2 |
| Example 3a | 418 | 87.1 | 75.2 | 11.6 |
| Example 3b | 414 | 84.6 | 73.7 | 11.5 |
| Example 3c | 413 | 81.2 | 70.8 | 12.5 |
| Example 4a | 420 | 87.8 | 80.2 | 9.5 |
| Example 4b | 417 | 87.1 | 79.7 | 9.3 |
| Example 5a | 426 | 88.9 | 82.2 | 8.9 |
| Example 5b | 424 | 89.2 | 82.0 | 8.7 |
| Example 5c | 420 | 87.6 | 81.5 | 9.8 |
| Example 6a | 416 | 86.5 | 83.2 | 8.4 |
| Example 6b | 412 | 81.1 | 82.8 | 8.8 |
| Example 7a | 426 | 85.8 | 73.1 | 11.8 |
| Example 7b | 426 | 86.3 | 74.2 | 11.2 |
| Example 7c | 418 | 87.2 | 78.3 | 10.4 |
| Example R1 | 410 | 89.4 | 83.7 | 8.4 |
| Example R2 | 455 | 88.5 | 75.1 | 12.5 |
| Example R3 | 498 | 88.1 | 73.0 | 13.7 |
| Comparative example 1 | 378 | 73.9 | 60.2 | 17.7 |
| Comparative example 2 | 405 | 79.2 | 58.7 | 18.2 |
| Comparative example 3 | 396 | 78.0 | 65.2 | 16.5 |
| Comparative example 4 | 425 | 80.5 | 56.1 | 20.8 |

It should be noted that, as used herein, terms "comprise", "include", or any other variants thereof are intended to encompass a non-exclusive inclusion such that a process, method, article, or device which includes a series of elements not only includes these very elements, but may also include other elements not expressly listed, or also include elements inherent to this process, method, article, or device. Without being subject to further limitations, an element defined by a phrase "including ..." does not exclude presence of other identical elements in the process, method, article, or device which includes the element. Furthermore, it should be noted that the scopes of the methods and devices in the embodiments of the present invention are not limited to performing functions in the order shown or discussed, but may also include performing functions in a substantially simultaneous manner or in a reverse order depending on the functions involved. For example, the described method may be performed in an order different from that described, and various steps may be added, omitted, or combined. Additionally, features described with reference to some examples may be combined in other examples.

The embodiments of the present invention have been described above. However, the present invention is not limited to the above embodiments. Any modification, equivalent replacement, improvement or the like made within the spirit and principle of the present invention shall fall within the scope of protection of the present invention.

## Claims

1. A silicon-carbon composite material, **characterized in that** the silicon-carbon composite material comprises a hierarchically porous carbon material, silicon nanoparticles dispersed in pore channels of the hierarchically porous carbon material, and an amorphous carbon layer coated on a surface of the hierarchically porous carbon material;
the pore structure of the hierarchically porous carbon material comprises micropores, mesopores, and macropores;
a pore volume of the hierarchically porous carbon material is 0.4 cm³/g-1.5 cm³/g; and
in the hierarchically porous carbon material, a pore volume of the micropores accounts for 60%-92% of the total pore volume.

2. The silicon-carbon composite material according to claim 1, **characterized in that** the silicon-carbon composite material has a specific surface area of 0.1 m²/g-50 m²/g, preferably 0.5 m²/g-6 m²/g; and/or
the hierarchically porous carbon material has a specific surface area of 500 m²/g-2000 m²/g, preferably 1000 m²/g-1500 m²/g.

3. The silicon-carbon composite material according to claim 1 or 2, **characterized in that** the pore volume of the silicon-carbon composite material is 0.0001 cm³/g-0.02 cm³/g, preferably 0.001 cm³/g-0.015 cm³/g; and/or
the pore volume of the hierarchically porous carbon material is 0.7 cm³/g-1.2 cm³/g.

4. The silicon-carbon composite material according to any one of claims 1-3, **characterized in that** in the hierarchically porous carbon material, the pore volume of the micropores accounts for 80%-91% of the total pore volume; and/or
in the hierarchically porous carbon material, a pore volume of the mesopores accounts for 5%-30%, preferably 6%-15%, of the total pore volume; and/or
in the hierarchically porous carbon material, a pore volume of the macropores accounts for 1%-20%, preferably 2%-10%, of the total pore volume.

5. The silicon-carbon composite material according to any one of claims 1-4, **characterized in that** the silicon-carbon composite material has a median particle size Dv50 of 5 µm-15 µm, preferably 5 µm-10 µm; and/or
the hierarchically porous carbon material has a median particle size Dv50 of 5 µm-15 µm, preferably 5 µm-10 µm.

6. The silicon-carbon composite material according to any one of claims 1-5, **characterized in that** the silicon-carbon composite material has a true density of 1.5 g/cm³-2.5 g/cm³, preferably 1.7 g/cm³-2.1 g/cm³; and/or
the hierarchically porous carbon material has a true density of 1.9 g/cm³-2.6 g/cm³, preferably 2 g/cm³-2.5 g/cm³.

7. The silicon-carbon composite material according to any one of claims 1-6, **characterized in that** in the silicon-carbon composite material, the amorphous carbon layer has a thickness of 1 nm-20 nm, preferably 5 nm-10 nm; and/or
the hierarchically porous carbon material has an I_{D} / I_{G} ratio of 0.5-1.5, preferably 0.8-1.5.

8. The silicon-carbon composite material according to any one of claims 1-7, **characterized in that** the silicon-carbon composite material further comprises nitrogen (N) element and/or phosphorus (P) element; and
preferably, in the silicon-carbon composite material, a content of the N element is 6 wt% or less, more preferably 2 wt%-5 wt%, and a content of the P element is 0.05 wt%-6 wt%, more preferably 1 wt%-5 wt%; and/or
in the silicon-carbon composite material, the hierarchically porous carbon material comprises at least one of the N and P doping elements; and/or
a content of the silicon nanoparticles in the silicon-carbon composite material is 10 wt%-60 wt%.

9. A negative electrode plate, **characterized in that** the negative electrode plate comprises a negative electrode current collector, and a negative electrode coating provided on a surface of at least one side of the negative electrode current collector, wherein the negative electrode coating comprises a negative electrode active material, and the negative electrode active material comprises the silicon-carbon composite material according to any one of claims 1-8; and
preferably, the content of the silicon-carbon composite material in the negative electrode active material is 3 wt% or more.

10. The negative electrode plate according to claim 9, **characterized in that** the negative electrode active material further comprises a carbon material and/or a silicon material, and the content of the silicon-carbon composite material in the negative electrode active material is 3 wt%-10 wt%; and/or
based on the total weight of the negative electrode coating, a content of the negative electrode active material is 80-99 wt%, a content of a conductive agent is 0.5-10 wt%, and a content of a binder is 0.5-10 wt%.

11. A battery, **characterized in that** the battery comprises a silicon-carbon composite material according to any one of claims 1-8 and/or a negative electrode plate according to claim 9 or 10.
